# FASCICULE DE BREVET EUROPEEN

(11) **EP 0 905 405 B1**
(45) Date de publication et mention de la délivrance du brevet: **02.04.2003**
(21) Numéro de dépôt: 98402315.0
(22) Date de dépôt: 18.09.1998
(51) Int. Cl.: F16F 1/38, F16F 1/387, B60G 7/02

(54) **Articulation élastique, notamment pour un train roulant de véhicule automobile**
Elastisches Gelenk, insbesondere für die Radaufhängung eines Kraftfahrzeugs
Elastic joint, especially for an automotive wheel suspension

(30) Priorité: 26.09.1997 FR 9712028
(43) Date de publication de la demande: 31.03.1999
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- EP-A- 0 641 954
- DE-A- 4 126 184
- DE-C- 4 127 092
- FR-A- 2 682 643
- FR-A- 2 720 801
- US-A- 3 467 421
- PATENT ABSTRACTS OF JAPAN vol. 012, no. 010 (M-658), 13 janvier 1988 & JP 62 171533 A (MAZDA MOTOR CORP), 28 juillet 1987

## Description

La présente invention a pour objet une articulation élastique, notamment pour un train roulant de véhicule automobile.

Chaque roue des trains roulants des véhicules automobiles et plus particulièrement des trains roulants avant, est reliée à la caisse du véhicule par l'intermédiaire d'un bras-support formé le plus souvent par un triangle de suspension.

Chaque extrémité du bras-support opposée à celle supportant la roue est reliée au berceau du moteur du véhicule par une articulation élastique.

L'articulation élastique ne doit pas posséder la même raideur élastique selon toutes les directions et comprend généralement un tube central et une enveloppe externe destinés à être reliés respectivement au châssis du véhicule et à une extrémité du bras-support.

Le tube central et l'enveloppe externe coaxiale sont reliés l'un à l'autre par adhérisation entre les surfaces en regard dudit tube central et de ladite enveloppe externe d'une masse en matériau élastomère.

La masse en matériau élastomère présente des formes particulières adaptées pour générer des raideurs élastiques différentes selon les sollicitations de l'articulation élastique.

Généralement, les articulations élastiques utilisées jusqu'à présent présentent un rapport entre la raideur axiale et la raideur radiale relativement élevé.

L'invention a pour but de proposer une articulation élastique à axe vertical qui présente des rigidités différemment réparties par rapport aux articulations élastiques classiques et qui permet d'avoir un sens de pivotement orienté suivant une direction bien définie, tout en formant une pièce compacte, monobloc et de coût réduit pour une fonction demandée complexe.

L'invention a donc pour objet une articulation élastique, notamment pour un train roulant de véhicule automobile, comprenant un tube central et une enveloppe externe coaxiale destinés à être reliés respectivement au châssis du véhicule et à une extrémité d'un bras support d'une roue du train roulant, caractérisée en ce qu'elle comprend :
- deux tenons radiaux et opposés, situés au centre du tube et s'étendant perpendiculairement à ce tube, lesdits tenons étant solidaires dudit tube,
- deux demi-bagues cylindriques disposées autour du tube central et adaptées pour être emmanchées dans l'enveloppe externe, chaque demi-bague présentant dans l'axe du tenon correspondant un orifice radial,
- et une masse en matériau élastomère reliant chaque demi-bague avec le tenon correspondant et avec le tube central, ladite masse en matériau élastomère comportant entre les tenons une gorge supérieure et une gorge inférieure séparées l'une de l'autre par une partie pleine de cette masse en matériau élastomère.

Selon d'autres caractéristiques de l'invention:
- chaque tenon est venu de matière avec le tube central,
- chaque tenon est réalisé en matériau thermoplastique surmoulé sur le tube central,
- chaque tenon présente une section circulaire,
- chaque demi-bague comporte sur ses bords supérieur et inférieur une portion en saillie,
- l'orifice radial ménagé dans chaque demi-bague est rond ou oblong,
- chaque demi-bague est réalisée en matériau thermoplastique ou en aluminium moulé,
- l'enveloppe externe comporte sur ses bords supérieur et inférieur une collerette rabattue vers l'intérieur.

Les caractéristiques et avantages de l'invention apparaîtront au cours de la description qui va suivre, donnée à titre d'exemple et faite en référence aux dessins annexés, sur lesquels :
- la Fig. 1 est une vue schématique de dessus d'un bras-support d'une roue d'un train roulant d'un véhicule automobile et muni à ses extrémités reliées à la caisse de ce véhicule d'une articulation élastique, conforme à l'invention,
- la Fig.2 est une vue en coupe selon la ligne 2-2 de la Fig. 1,
- la Fig. 3 est une vue en coupe selon la ligne 3-3 de la Fig. 1.,
- la Fig.4 est une vue en coupe longitudinale du tube central de l'articulation élastique, conforme à l'invention,
- la Fig. 5 est une vue en coupe transversale d'une demi-bague de l'articulation élastique, conforme à l'invention,
- la Fig. 6 est une vue en coupe longitudinale de l'enveloppe externe de l'articulation élastique, conforme à l'invention,
- la Fig. 7 est une vue en coupe longitudinale de l'articulation élastique montrant le pivotement du bras de support de la roue du train roulant.

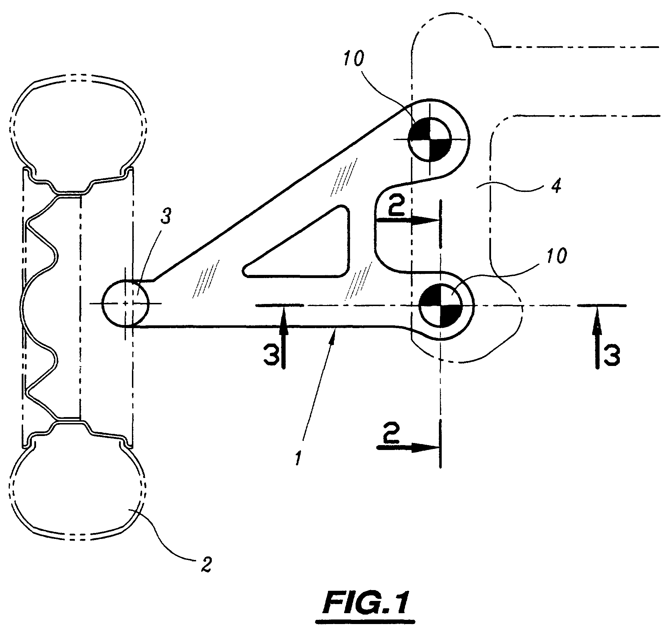

Sur la Fig. 1, on a représenté schématiquement un bras-support 1 d'une roue 2 d'un train roulant de véhicule automobile.

Ce bras-support 1 est formé par un triangle de suspension dont une extrémité est reliée à la roue 2 par un pivot 3 et dont les deux autres extrémités sont reliées chacune à la caisse 4 du véhicule automobile, comme par exemple le berceau du moteur, par une articulation 10 à axe vertical.

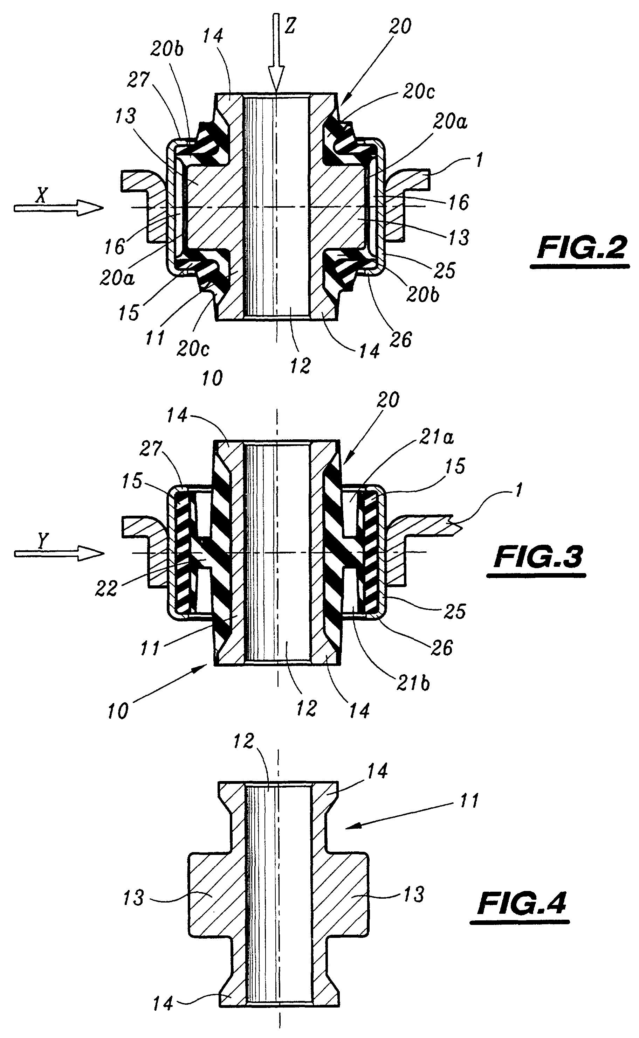

En se reportant maintenant aux Figs.2 à 6, on va décrire une articulation élastique 10 à axe vertical.

Cette articulation élastique 10 comprend un tube central 11 métallique, comme par exemple en acier ou en aluminium.

Le tube central 11 comporte un alésage axial 12 destiné au passage d'un organe de liaison, non représenté, avec la caisse 4 du véhicule automobile.

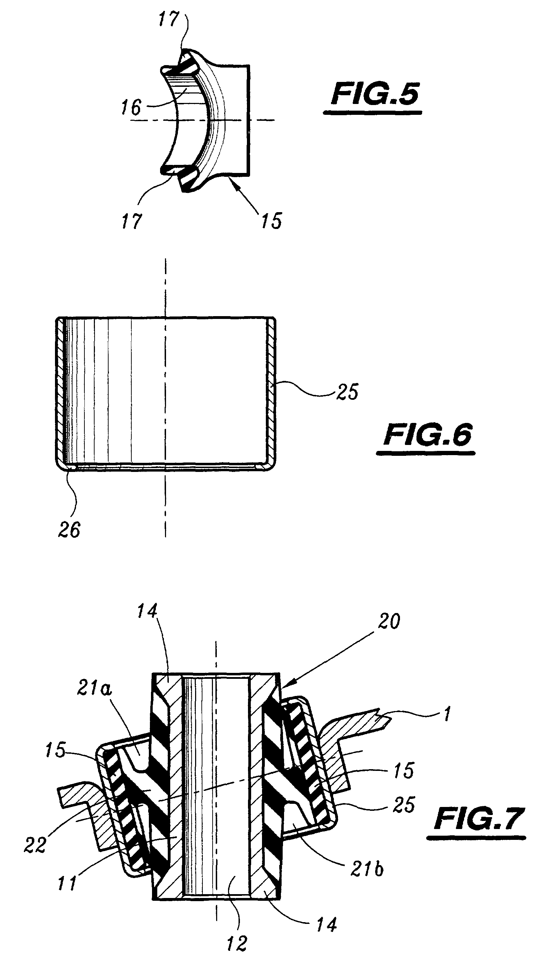

Ce tube central 11 comporte également deux tenons 13 radiaux et opposés, situés au centre du tube 11 et s'étendant perpendiculairement à celui-ci, comme représenté plus particulièrement à la Fig. 4.

Enfin, le tube central 11 comporte aussi, à chacune de ses extrémités, un rebord périphérique 14.

Selon un premier mode de réalisation, chaque tenon 13 est venu de matière avec le tube central 11.

Selon un second mode de réalisation, chaque tenon 13 est réalisé en matériau thermoplastique surmoulé sur le tube central 11 qui est de préférence, dans ce cas, en acier.

Chaque tenon 13 présente une section circulaire.

L'articulation élastique 10 comprend également deux demi-bagues 15 cylindriques destinées à être placées autour du tube central 11.

Chaque demi-bague 15 réalisée de préférence en matériau thermoplastique ou en aluminium moulé comporte un orifice radial 16 rond ou oblong et destiné à être disposé dans l'axe du tenon 13 correspondant.

D'autre part, chaque demi-bague 15 comporte sur ses bords supérieur et inférieur une portion en saillie 17, comme représenté à la Fig. 5.

Les demi-bagues 15 sont maintenues sur le tube central 11 par une masse en matériau élastomère désignée dans son ensemble par la référence 20 et qui adhère sur les faces en regard du tube central 11 et des demi-bagues 15.

Comme représenté sur les Figs 2 et 3, la masse 20 en matériau élastomère relie donc chaque demi-bague 15 avec le tenon 13 correspondant et avec le tube central 11.

Cette masse 20 en matériau élastomère s'étend autour des tenons 13 pour former, entre ces tenons 13 et les demi-bagues 15, une portion d'élastomère 20a disposée sur les extrémités dudit tenon 13 et une portion d'élastomère 20b disposée entre la périphérie des tenons 13 et la face interne des demi-bagues 15.

Par ailleurs, une portion d'élastomère 20c s'étend entre les portions en saillie 17 de chaque demi-bague 15 et la paroi externe du tube central 11.

D'autre part, la masse 20 en matériau élastomère comporte, entre les tenons 13 du tube central 11, une gorge supérieure 21a et une gorge inférieure 21b séparées l'une de l'autre par une partie pleine 22 de cette masse 20 en matériau élastomère.

L'articulation élastique 10 comporte enfin une enveloppe externe 25 coaxiale au tube central 11 et qui est destinée à être reliée à l'extrémité correspondante du bras-support 1.

Comme représenté à la Fig. 6, l'enveloppe externe 25 est formée par une douille ménageant un espace interne destiné à recevoir l'ensemble constitué par le tube central 11, la masse 20 en matériau élastomère et les deux demi-bagues 15.

Cette enveloppe externe 25 comporte sur son bord inférieur une collerette 26 rabattue vers l'intérieur.

L'enveloppe externe 25 est de préférence en acier.

L'assemblage des différents éléments composant l'articulation élastique 10 est réalisé de la façon suivante.

Tout d'abord, on prépare la face externe du tube central 11 et les faces internes des deux demi-bagues 15 pour l'adhérisation du matériau élastomère et on place ce tube central 11 et ces deux demi-bagues 15 dans un outil de moulage, non représenté, et on injecte entre ces éléments la masse 20 en matériau élastomère.

Après ce surmoulage, on emmanche dans l'enveloppe externe 25, les deux demi-bagues 15 solidaires du tube central 11 par la masse 20 en matériau élastomère, puis le bord supérieur de l'enveloppe externe 25 est rabattu vers l'intérieur pour former une collerette 27 et cet ensemble est emmanché dans l'orifice correspondant ménagé à l'extrémité du bras-support 1.

Comme on peut le voir à la Fig. 7, le bras support 1 peut pivoter autour de l'axe X grâce aux tenons 13 qui tournent dans les orifices 16 des deux demi-bagues 15 avec un filtrage propre aux portions d'élastomère 20b qui assurent le rappel.

Ainsi, le bras support 1 peut se débattre de façon orientée autour de l'axe X.

Les orifices 16 ménagés dans les deux demi-bagues 15 peuvent être ronds ou oblongs en fonction des débattements et des raideurs à obtenir suivant les axes X,Y et Z.

Le bras-support 1 peut se déplacer suivant l'axe Y grâce aux gorges 21a et 21b ménagées dans la masse 20 en matériau élastomère entre les tenons 13.

La quantité de matériau élastomère située au niveau de ces gorges 21a et 21b assure la rigidité partielle selon l'axe Y sans avoir une grande influence dans l'axe Z.

La portion 21a de matériau élastomère placée au niveau des extrémités de chaque tenon 13 permet de régler une loi de flexibilité sur l'axe X. La rigidité suivant cet axe X est assurée par les portions 20a ainsi que par le cisaillement des portions d'élastomère 20b et par la compression radiale des portions d'élastomère 20c entre les tubes 10 et les portions en saillie 17 des demi-bagues 15.

La rigidité suivant l'axe Z est assurée principalement par la rigidité radiale des portions d'élastomère 20b comprimées entre le tube central 11 et chaque tenon 13 et par la compression des portions d'élastomère 20c entre le tube central 11 et les portions en saillie 17 des demi-bagues 15.

L'articulation élastique à axe vertical selon l'invention permet de maîtriser le sens de débattement angulaire du bras-support d'un train roulant grâce au principe des tenons tourillonnants.

La raideur conique est celle de la rigidité tortionnelle de l'articulation élastique.

De plus, les différentes raideurs peuvent être facilement réglées en jouant sur la forme des orifices des deux demi-bagues et sur le diamètre des tenons.

L'articulation élastique selon l'invention présente l'avantage de former une pièce compacte et de coût réduit.

## Revendications

1. Articulation élastique notamment pour un train roulant de véhicule automobile, comprenant un tube central (11) et une enveloppe externe (25) coaxiale destinés à être reliés respectivement au châssis (4) du véhicule et à une extrémité d'un bras support (1) d'une roue (2) du train roulant, **caractérisée en ce qu'**elle comprend :
- deux tenons (13) radiaux et opposés, situés au centre du tube central (11) et s'étendant perpendiculairement à ce tube (11), lesdits tenons (13) étant solidaires dudit tube (11),
- deux demi-bagues (15) cylindriques disposées autour du tube central (11) et adaptées pour être emmanchées. dans l'enveloppe externe (25), chaque demi-bague (15) présentant dans l'axe du tenon (13) correspondant un orifice radial (16),
- et une masse (20) en matériau élastomère reliant chaque demi-bague (15) avec le tenon (13) correspondant et avec le tube central (11), ladite masse (20) en matériau élastomère comportant, entre les tenons (13), une gorge supérieure (21a) et une gorge inférieure (21b) séparées l'une de l'autre par une partie pleine (22) de cette masse (20) en matériau élastomère.

2. Articulation élastique selon la revendication 1, **caractérisée en ce que** chaque tenon (13) est venu de matière avec le tube central (11).

3. Articulation élastique selon la revendication 1, **caractérisée en ce que** chaque tenon (13) est réalisé en matériau thermoplastique surmoulé sur le tube central (11).

4. Articulation élastique selon l'une quelconque des revendications précédentes, **caractérisée en ce que** chaque tenon (13) présente une section circulaire.

5. Articulation élastique selon la revendication 1, **caractérisée en ce que** chaque demi-bague (15) comporte sur ses bords supérieur et inférieur une portion (17) en saillie.

6. Articulation élastique selon la revendication 1, **caractérisée en ce que** l'orifice radial (16) ménagé dans chaque demi-bague (15) est rond ou oblong.

7. Articulation élastique selon l'une quelconque des revendications 1, 5 et 6, **caractérisée en ce que** chaque demi-bague (15) est réalisée en matériau thermoplastique ou en aluminium moulé.

8. Articulation élastique selon la revendication 1, **caractérisée en ce que** l'enveloppe externe (25) comporte sur ses bords supérieur et inférieur une collerette (26, 27) rabattue vers l'intérieur.

## Patentansprüche

1. Elastisches Gelenk, insbesondere für die Radaufhängung eines Kraftfahrzeugs, welches ein in der Mitte gelegenes Rohr (11) und eine äußere koaxiale Ummantelung (25) umfasst, welche dazu bestimmt sind, einerseits mit dem Fahrwerk (4) des fahrzeugs und andererseits mit einem Ende eines Trägerarms (1) eines Rades (2) der Radaufhängung verbunden zu werden, **dadurch gekennzeichnet, dass** das Gelenk Folgendes umfasst:
- zwei radiale und einander gegenüberliegende Zapfen (13), welche in der Mitte des zentralen Rohres (11) gelegen sind und sich senkrecht zu diesem Rohr (11) erstrecken, wobei die besagten Zapfen (13) mit dem besagten Rohr (11) kraftschlüssig verbunden sind.
- zwei zylindrische Halbringe (15), welche um das zentrale Rohr (11) herum angeordnet sind und die geeignet sind, in die äußere Ummantelung (25) eingepasst zu werden, wobei jeder Halbring (15) in der Achse des zugehörigen Zapfens (13) eine radiale Öffnung (16) hat.
- und eine Masse (20) aus Elastomermaterial, welche jeden Halbring (15) mit dem zugehörigen Zapfen (13) und mit dem zentralen Rohr (11) verbindet, wobei die besagte Masse (20) aus Elastomermaterial zwischen den Zapfen (13) eine obere (21a) und eine untere (21b) Einkerbung trägt, welche voneinander durch einen mit der Elastomermaterialmasse (20) ausgefüllten Teil (22) getrennt sind.

2. Elastisches Gelenk nach Anspruch 1, **dadurch gekennzeichnet, dass** jeder Zapfen (13) mit dem zentralen Rohr (11) hergestellt worden ist.

3. Elastisches Gelenk nach Anspruch 1, **dadurch gekennzeichnet, dass** jeder Zapfen (13) aus thermoplastischem Material hergestellt ist, welches auf das zentrale Rohr (11) aufgegossen worden ist.

4. Elastisches Gelenk nach einem der vorangehenden Ansprüche, **dadurch gekennzeichnet, dass** jeder Zapfen (13) einen kreisförmigen Querschnitt hat.

5. Elastisches Gelenk nach Anspruch 1, **dadurch gekennzeichnet, dass** jeder Halbring (15) an seinen oberen und unteren Rändern einen vorspringenden Teil (17) hat.

6. Elastisches Gelenk nach Anspruch 1, **dadurch gekennzeichnet, dass** die radiale Öffnung (16), welche in jedem Halbring (15) angeordnet ist, rund oder länglich ist.

7. Elastisches Gelenk nach einem der Ansprüche 1, 5 und 6, **dadurch gekennzeichnet, dass** jeder Halbring (15) aus einem thermoplastischen Material oder aus gegossenem Aluminium hergestellt ist.

8. Elastisches Gelenk nach Anspruch 1, **dadurch gekennzeichnet, dass** die äußere Ummantelung (25) an ihren oberen und unteren Rändern eine nach innen umgeschlagene Kragung (26, 27) trägt.

## Claims

1. Elastic joint, especially for an automotive vehicle wheel suspension, comprising a central tube (11) and a coaxial external cover (25) which are intended to be connected respectively to the chassis (4) of the vehicle and to one end of a bracket (1) of a wheel (2) of the wheel suspension, **characterised in that** it comprises:
- two radial, opposite pins (13) which are situated at the centre of the central tube (11) and extend perpendicularly to this tube (11), said pins (13) being integral with said tube (11),
- two cylindrical half-rings (15) which are disposed around the central tube (11) and are adapted in order to be shrunk into the external cover (25), each half-ring (15) presenting a radial orifice (16) in the corresponding axis of the pin (13),
- and a mass (20) made of elastomer material which connects each half-ring (15) to the corresponding pin (13) and to the central tube (11), said mass (20) made of elastomer material, comprising, between the pins (13), an upper recess (21a) and a lower recess (21b) which are separated from each other by a solid part (22) of this mass (20) made of elastomer material.

2. Elastic joint according to claim 1, **characterised in that** each pin (13) comprises a single piece of material with the central tube (11).

3. Elastic joint according to claim 1, **characterised in that** each pin (13) is produced in thermoplastic material moulded upon the central tube (11).

4. Elastic joint according to any of the preceding claims, **characterised in that** each pin (13) presents a circular section.

5. Elastic joint according to claim 1, **characterised in that** each half-ring (15) comprises a projecting part (17) on its upper and lower edges.

6. Elastic joint according to claim 1, **characterised in that** the radial orifice (16) which is provided in each half-ring (15) is round or oblong.

7. Elastic joint according to any of the claims 1, 5 and 6, **characterised in that** each half-ring (15) is produced in thermoplastic material or in moulded aluminium.

8. Elastic joint according to claim 1, **characterised in that** the external cover (25) comprises a collar (26, 27), on its upper and lower edges, which is turned down towards the interior.
